Europäisches Patentamt

(19) European Patent Office

Office européen des brevets

(11) Numéro de publication : **0 069 624**
**B1**

(12) **FASCICULE DE BREVET EUROPÉEN**

(45) Date de publication du fascicule du brevet :
13.03.85

(51) Int. Cl.⁴ : **A 01 K 69/08**

(21) Numéro de dépôt : **82401138.1**

(22) Date de dépôt : **22.06.82**

(54) Perfectionnements à des nasses pour crustacés.

(30) Priorité : **03.07.81 FR 8113142**

(43) Date de publication de la demande :
**12.01.83 Bulletin 83/02**

(45) Mention de la délivrance du brevet :
**13.03.85 Bulletin 85/11**

(84) Etats contractants désignés :
**DE FR GB**

(56) Documents cités :
**FR-A- 322 169**
**FR-A- 1 433 759**
**FR-A- 2 112 566**
**FR-A- 2 398 454**
**FR-A- 2 427 048**
**GB-A- 1 573 922**
**US-A- 3 992 804**

(73) Titulaire : **ALLIBERT S.A. Société anonyme dite:**
**129, avenue Léon Blum**
**F-38042 Grenoble Cedex (FR)**

(72) Inventeur : **Faucillon, Michel**
**6, rue Jean Giono**
**F-95560 Baillet en France (FR)**

(74) Mandataire : **Lerner, François**
**5, rue Jules Lefebvre**
**F-75009 Paris (FR)**

EP 0 069 624 B1

Jouve, 18, rue St-Denis, 75001 Paris, France

## Description

La présente invention a pour objet des perfectionnements à des nasses pour crustacés.

Les nasses pour crustacés sont des articles connus depuis fort longtemps, se présentant sous la forme d'un panier grillagé pourvu d'une ouverture de forme tronconique par laquelle les crustacés pénètrent dans le panier pour venir consommer un appât qui y a été préalablement placé, le crustacé ne retrouvant pas ensuite la sortie du fait de son positionnement dans l'espace et de sa forme tronconique offrant donc une sortie de diamètre plus faible que l'entrée. Antérieurement, l'ossature de ces paniers était fabriquée en bois, tel que l'osier ou en ferraille. De telles constructions sont fragiles et d'entretien difficile.

Plus récemment, on a proposé des nasses plus ou moins copiées des anciens modèles existants et dans lesquelles les matériaux plastiques ont remplacé le bois ou le métal. De tels casiers sont plus résistants mais leur conception globale est généralement mal adaptée, et leur emploi présente divers inconvénients.

Selon la demande de brevet FR-A-2 398 454, on connaît une nasse en matière plastique formée de deux demi-cages identiques, en forme générale de bol ou cuvette, verrouillables en positions opposées en vis-à-vis, pour former une cage, chaque demi-cage identique comportant en son centre une ouverture faisant saillie vers la concavité de la cuvette. Dans la position de montage de la nasse, la moitié inférieure est lestée formant fond, et la moitié supérieure, formant couvercle reçoit, dans son ouverture, un goulot d'entrée. Un filet entoure la cage, sauf l'orifice supérieur d'entrée. Dans la position désassemblée, le couvercle et le fond peuvent se gerber en pile par retournement et emboîtage des parties.

Selon le brevet FR-A-1 433 759, on connaît un casier formé de deux parties séparables maillées qui sont moulées dans une matière plastique, le casier comprenant un fond circulaire plan qui est surmonté d'une coupole en treillis d'une pièce de forme tronconique dont l'extrémité de grand diamètre est reliée au pourtour du fond, tandis que son extrémité étroite se termine par une paroi de fermeture arrondie vers le haut présentant une ouverture centrale rentrante se rétrécissant vers le bas et qui constitue le goulet d'entrée du casier. Un anneau de lestage métallique rigide est fixé de façon permanente au pourtour dudit fond.

Selon le brevet GB-A-1 573 922, on connaît un casier formé de deux parties séparables qui sont moulées dans une matière plastique, le casier comprenant un fond circulaire plan surmonté d'une coupole en armature ajourée se terminant sur le dessus par une face plane dans laquelle vient s'engager un goulet tronconique se rétrécissant vers le bas formant l'entrée du casier. Sur l'armature en coupole on fixe un filet de maillage approprié.

L'invention se rapporte à des perfectionnements à des nasses utilisant au mieux les propriétés des matières plastiques pour permettre de réaliser des nasses d'emploi amélioré.

Une nasse, conforme à l'invention, en particulier pour crustacés, constituée principalement en matière plastique et comprenant deux parties montées de façon amovible, par exemple articulée, l'une sur l'autre, l'une étant un fond de forme générale plane munie d'un lestage et l'autre une cage sensiblement tronconique avec sa grande base reliée au fond et formant armature de support pour un filet fixé dessus, une ouverture en goulet, dirigée vers l'intérieur de la cage et se rétrécissant vers le bas, dégagée du filet, étant prévue dans le centre de la face supérieure de la cage, se caractérise notamment en ce que ledit fond comporte vers son centre une partie en creux faisant saillie vers l'extérieur, c'est-à-dire vers le bas dans la position normale de la nasse, les dimensions extérieures de cette saillie correspondant à celles de ladite ouverture permettant ainsi l'engagement de cette saillie dans l'ouverture d'une nasse disposée en dessous pour le stockage.

Selon une autre caractéristique de l'invention, le fond comporte sur sa périphérie deux bordures légèrement distantes l'une de l'autre, et entre lesquelles sont ménagés des volumes débouchant par des orifices sur le dessus et sur le dessous et dans lesquels volumes sont coulés des lests en béton ou analogue.

Avec une telle conception de fabrication, on obtient une très bonne stabilité des casiers lorsqu'ils sont mis en place sur les fonds de pêche, le lest en béton donnant un poids suffisant aux casiers et abaissant le plus possible le centre d'inertie, ce qui est un gage de stabilité. En outre, les lests forment des pieds anti-usure et antidérapants. Lorsqu'ils sont vides, les casiers sont facilement superposables en piles stables grâce à l'emboîtement partiel réalisé entre fond et partie supérieure de la cage.

Selon une autre caractéristique de l'invention, sur l'ouverture de la cage vient s'adapter par clipsage par simple engagement en force un cône réducteur conformé avec une paroi présentant deux troncs de cônes dont le plus petit diamètre est légèrement inférieur au diamètre de ladite ouverture, et dont le plus grand diamètre est légèrement supérieur audit diamètre d'ouverture. De cette façon, on peut adapter en un seul geste la nasse au type de crustacés que l'on veut pêcher, le cône réducteur étant mis en place par simple engagement dans l'ouverture tronconique d'entrée de la cage, et pouvant être enlevé de la même façon en poursuivant le mouvement d'enfoncement du cône réducteur au-delà de la position de mise en place dudit réducteur.

L'invention, sa mise en œuvre et ses avantages apparaîtront plus clairement à l'aide de la description détaillée qui va suivre, faite en référence aux dessins annexés donnant uniquement à titre d'exemple un mode de réalisation. Dans ces dessins :

la figure 1 est une vue schématique en perspective illustrant une nasse conçue selon l'invention ;

la figure 2 montre, vu par-dessus, comment est constitué le fond de la nasse ;

les figures 3 et 4 sont des vues en coupe illustrant la mise en place du cône réducteur ;

la figure 5 montre en vue perspective éclatée une variante ;

la figure 6 montre à plus grande échelle un détail de la nasse illustrée à la figure 5.

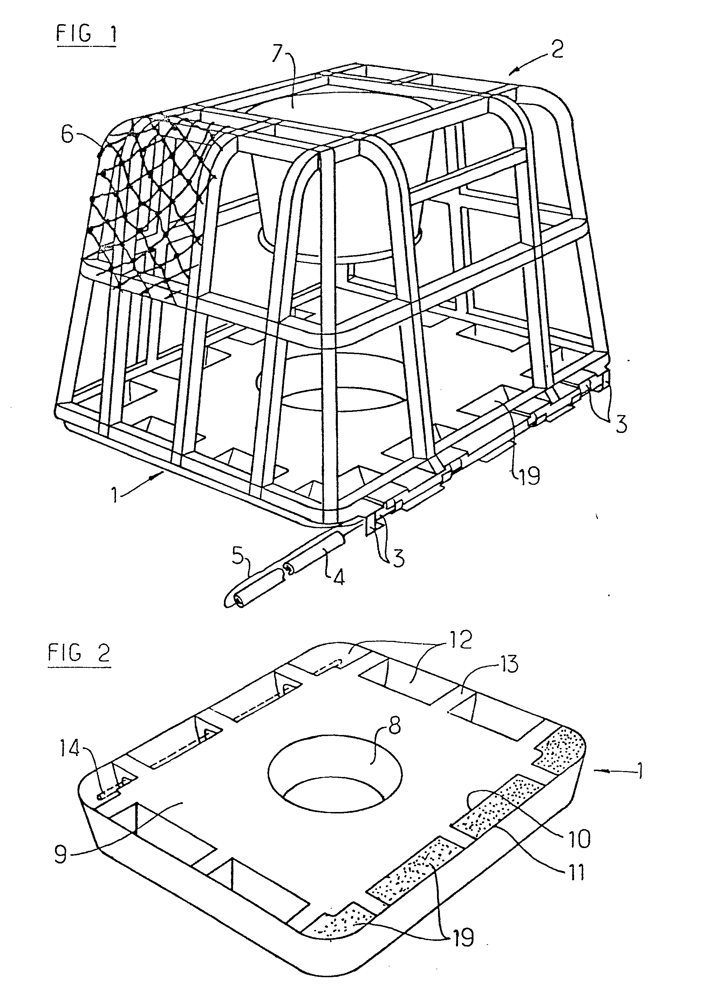

Selon le mode de réalisation illustré aux dessins, la nasse comprend essentiellement un fond 1 sur lequel est montée une cage 2. La cage et le fond sont fixés de façon amovible, par exemple au moyen de charnières 3 solidaires du fond et de la cage, et d'axes 4 pouvant être engagés dans ces charnières. Dans l'exemple illustré à la figure 1, l'axe 4 est un axe creux qui est traversé par une ficelle ou un autre lien souple 5 permettant l'engagement et le dégagement de l'axe et évitant de le perdre, le lien 5 étant attaché au fond 1. Sur la cage 2 est fixé un filet 6 dont le maillage est adapté à la pêche à laquelle on procède. Sur le sommet de la cage est formée une ouverture tronconique 7 par laquelle entrent les crustacés appâtés par un appât déposé sur le fond, par exemple dans la partie centrale formée en creux 8 du fond. La partie 8 formée en creux fait saillie par rapport au plan 9 de la surface centrale principale du fond 1. Ses dimensions correspondent sensiblement au diamètre d'entrée de l'ouverture 7, de sorte que les nasses peuvent être superposées les unes sur les autres en piles stables du fait de l'engagement partiel de la partie 8 en saillie dépassant sur le fond d'un casier placé au-dessus et pénétrant dans l'ouverture 7 d'un casier placé en dessous.

Comme il apparaît plus clairement à la figure 2, le fond comporte sur sa périphérie deux bordures 10, 11 entre lesquelles sont ménagés des volumes dans lesquels sont coulés des blocs en béton 19 qui formeront le lest de la nasse. Des orifices tels que 12 sont formés sur le dessus facilitant la coulée du béton, tandis que d'autres orifices non visibles sur la figure débouchent sur le dessous en regard des parties 13 formant ponts de jonction entre les nervures supérieures des bordures 10, 11. Ainsi, sur le dessous du panier et au droit des ponts 13 sont formés des pieds ou patins en béton qui éviteront une usure prématurée de la surface d'appui du casier.

Avantageusement, des armatures métalliques telles que schématisées en 14 seront placées dans les volumes entre les bordures 10 et 11 avant coulage du béton, renforçant la structure.

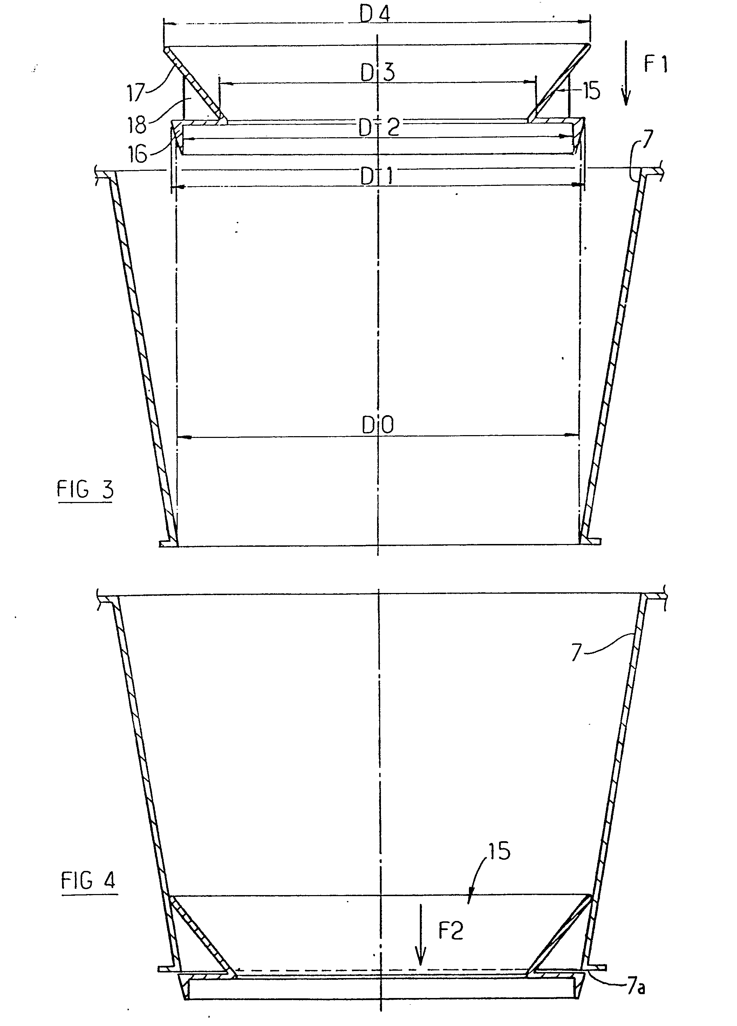

Pour permettre l'adaptation de la nasse décrite aux caractéristiques de la pêche entreprise, et comme illustré plus clairement aux figures 3 et 4, on prévoit en outre un cône réducteur 15 qui s'adapte sur l'ouverture tronconique 7 de la cage.

Pour faciliter sa mise en place et sa tenue sur l'ouverture 7, la paroi du réducteur 15 est conformée de manière à présenter deux troncs de cône respectivement 16 et 17, orientés dans le même sens. Les petits diamètres extérieurs D3 et D2 des troncs de cône 16 et 17 sont respectivement légèrement inférieurs au petit diamètre D0 de l'ouverture 7. De façon semblable, les grands diamètres D1 et D4 des troncs de cône 16 et 17 sont légèrement supérieurs au diamètre D0.

Dans ces conditions, il suffit pour mettre en place le réducteur 15 de l'engager en le poussant selon la flèche F1 comme illustré à la figure 3 par-dessus l'ouverture 7 et de le pousser dans l'ouverture jusqu'à ce que, comme illustré à la figure 4, le bord inférieur 7a de l'ouverture 7 vienne s'engager dans l'intervalle compris entre les deux troncs de cône 16, 17. Si l'on veut retirer le réducteur, ceci peut être fait en continuant à l'engager dans le même sens comme indiqué par la flèche F2 à la figure 4, et ce en jouant sur les élasticités de la matière plastique constituant l'ouverture 7 et le cône réducteur 15. En 18, on aperçoit des languettes de raidissage venant légèrement en retrait du diamètre D0 de l'ouverture 7 et qui assurent la jonction des deux cônes 16, 17 du réducteur 15 en vue d'une bonne résistance de cette pièce.

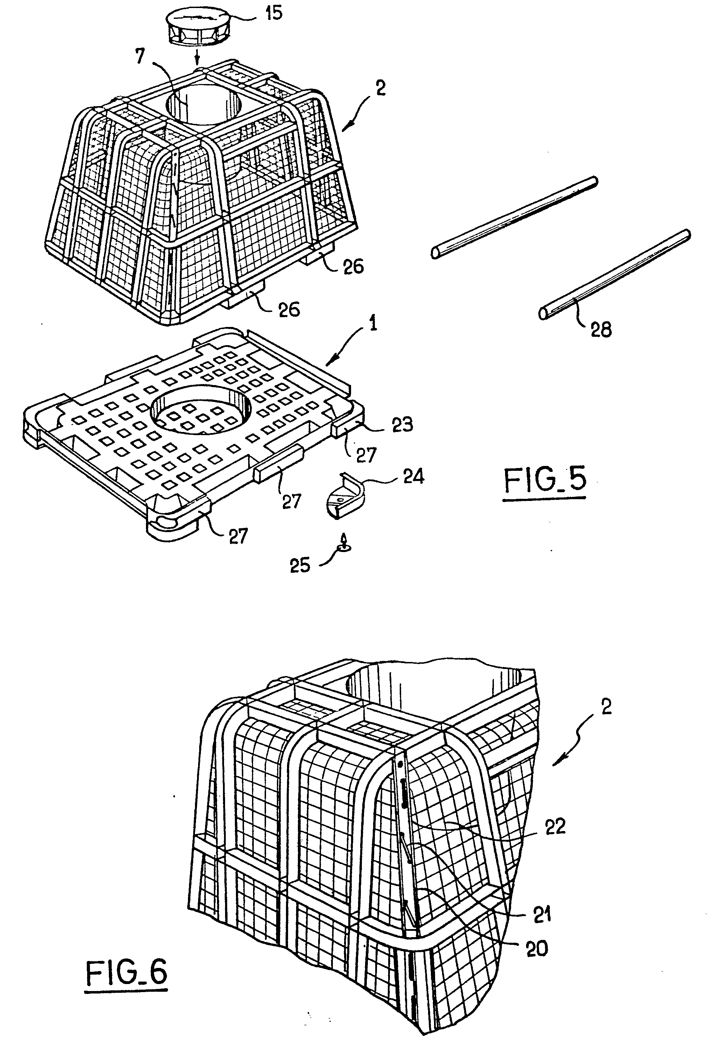

Selon la variante de réalisation illustrée aux figures 5 et 6, la cage 2 est constituée de profilés en plastique moulé ayant une section essentiellement en U comme il apparaît plus clairement à la figure 6. Ceci permet, tout en obtenant une structure rigide, de protéger à l'intérieur du profilé tel qu'il apparaît plus clairement sur le profilé d'angle repéré 20 à la figure 6, le fil 21 par lequel est attaché à l'intérieur de la cage le filet 22 remplaçant le filet 6 du mode de réalisation illustré à la figure 1. De cette façon, le filet est également protégé à l'intérieur de la cage et est donc moins sujet à usure ou déchirure. Dans de telles conditions, il peut économiquement et avantageusement être constitué par un maillage plastique moulé de type classique existant dans le commerce et moins coûteux qu'un véritable filet noué de type utilisé habituellement pour la pêche.

A la figure 5, on aperçoit également que le fond lesté 1 reçoit en ses quatre angles, tels que l'angle repéré 23, un patin 24 formant pied rapporté fixé par exemple au fond par un rivet 25. Le patin est avantageusement constitué en un matériau anti-usure et antidérapant par exemple moulé en polyuréthane ou en nylon. Les pieds de la cage qui ont tendance à s'user peuvent donc être remplacés quand nécessaire.

Au niveau de la solidarisation entre la cage 2 et le fond 1, on note les parties formées en manchon 26 solidaires de la cage 2 et des parties complémentaires également creuses 27 solidaires du fond 1 venant en correspondance et dans lesquelles on engagera l'axe de verrouillage 28 de chaque côté de la cage.

## Revendications

1. Nasse, en particulier pour crustacés, constituée principalement en matière plastique et comprenant deux parties montées de façon amovible, par exemple articulée, l'une sur l'autre, l'une étant un fond (1) de forme générale plane munie d'un lestage (19) et l'autre une cage (2) sensiblement tronconique avec sa grande base reliée au fond (1) et formant armature de support pour un filet (6) fixé dessus, une ouverture (7) en goulet, dirigée vers l'intérieur de la cage et se rétrécissant vers le bas, dégagée du filet, étant prévue dans le centre de la face supérieure de la cage (2), caractérisée en ce que ledit fond (1) comporte vers son centre une partie en creux (8) faisant saillie vers l'extérieur, c'est-à-dire vers le bas dans la position normale de la nasse, les dimensions extérieures de cette saillie correspondant à celles de ladite ouverture (7), permettant l'engagement de cette saillie dans l'ouverture (7) d'une nasse disposée en dessous pour le stockage.

2. Nasse selon la revendication 1, caractérisée en ce que ledit fond comporte sur sa périphérie deux bordures légèrement distantes (10, 11) l'une de l'autre et entre lesquelles sont ménagés des volumes débouchants par des orifices respectivement sur le dessus (12) et sur le dessous et dans lesquels volumes sont coulés des lests en béton (19) ou analogue.

3. Nasse selon la revendication 2, caractérisée en ce que dans lesdits volumes sont placées, avant coulage des lests en béton, des armatures, par exemple métalliques, (14) de renforcement.

4. Nasse selon la revendication 2 ou la revendication 3 caractérisée en ce que lesdits volumes s'ouvrant sur le dessus (en 12) et s'ouvrant sur le dessous ne sont pas en regard les uns des autres, les volumes remplis de béton s'ouvrant sur le dessous formant patins de support de la nasse.

5. Nasse selon l'une des revendications précédentes, caractérisée en ce que sur ladite ouverture (7), vient s'adapter par clipsage par simple engagement à force un cône réducteur (15) conformé avec une paroi présentant deux troncs de cône (16, 17) orientés dans le même sens et dont le plus petit diamètre extérieur de chacun (D3, D2) est légèrement inférieur au petit diamètre (D0) de ladite ouverture (7) et dont le plus grand diamètre extérieur (D1, D4) est légèrement supérieur audit petit diamètre d'ouverture.

6. Nasse selon la revendication 5, caractérisée en ce que entre lesdits deux troncs de cône (16, 17) sont formées des languettes de raidissage (18) qui viennent légèrement en retrait par rapport audit diamètre (D0) de ladite ouverture.

7. Nasse selon l'une des revendications précédentes, caractérisée en ce que la cage (2) et le fond (1) sont réunis entre eux par des barres d'articulation (4) susceptibles d'être introduites par translation dans des œillets de charnière (3) coopérants du fond et de la cage, lesdites barres étant creuses, et un lien souple (5), tel qu'une ficelle ou analogue, les traversant et étant fixé audit fond.

8. Nasse selon l'une des revendications précédentes, caractérisée en ce que les armatures de la cage sont constituées par des profilés (20) creux à section ouverte dans lesquels sont protégés les liens (21) de fixation du filet (22) maintenu contre les parois internes de la cage.

9. Nasse selon la revendication 8, caractérisée en ce que le filet (22) est formé par un treillis plastique moulé.

10. Nasse selon l'une des revendications précédentes, caractérisée en ce que des pieds rapportés en forme de patins (24) sont fixés aux quatre angles inférieures du fond (1).

## Claims

1. Trap, especially for crustacea, formed principally from a plastics material and comprising two parts movably mounted upon one another, for example articulated, one part constituting a base (1) of generally flat form provided with a buttress (19) and the other forming a cage (2) which is generally in the form of a truncated case with its large base connected to the bottom (1) and forming a support framework for a net (6) fixed above, a narrow opening (7), which is directed towards the interior of the cage, tapers towards the bottom, and is clear of the net being provided in the centre of the upper surface of the cage (2), characterised in that the said base (1) includes at its centre a hollow portion (8) projecting towards the outside, i.e. downwards in the normal position of the pot, the external dimensions of this projection corresponding to those of the said opening (7), permitting engagement of this projection within the opening (7) of a pot arranged beneath, for the purpose of storage.

2. Trap according to claim 1, characterised in that the said base includes on its periphery two edges (10, 11) slightly spaced from one another and between which are arranged spaces which open out through orifices respectively onto the top (12) and onto the bottom and into which spaces are poured weight of concrete (19) or the like.

3. Trap according to claim 2, characterised in that in the said spaces are located, before pouring the concrete weights, reinforcements, for example of metal (14).

4. Trap according to claim 2 or claim 3 characterised in the said spaces opening onto the top (12) and onto the bottom are not opposite to one another, the spaces filled with concrete opening onto the bottom forming supporting shoes for the pot.

5. Trap according to any one of the preceding claims, characterised in that the said opening (7) fits by snapaction engagement a reducing cone (15) and conformed to a wall having two truncated cones, orientated in the same direction (16, 17) of which the smaller external diameter of each (D3, D2) is slightly less than the small diameter (D0) of the said opening (7) and of which the greatest external diameter (D1, D4) is slightly greater than the said small diameter of the opening.

6. Trap according to claim 5, characterised in that between the said two truncated cones (16, 17) are formed stiffening tongues (18) which retract slightly with reference to the diameter (D0) of the said opening.

7. Trap according to any of the preceding claims, characterised in that the cage (2) and the base (1) are connected together by pivot bars (4) which can be introduced by displacement into hinge eyelets (3) cooperating of the bottom and of the cage, the said bars being hollow, and a flexible connector (5) such as string or the like passing through them and being fixed to the said base.

8. Trap according to any of the preceding claims, characterised in that the cage reinforcements are formed by hollow profiles (20) having an open section within which are protected the connecting members (21) for fixing the net (22) held against the internal walls of the cage.

9. Trap according to claim 8, characterised in that the net (22) is formed from a moulded plastics mesh.

10. Trap according to any of the preceding claims, characterised in that feet in the form of shoes (24) are fixed to the four lower corners of the base (1).

## Ansprüche

1. Reuse, insbesondere für Schalentiere, die hauptsächlich aus Kunststoff besteht und zwei lösbar, z. B. durch Anlenken, aufeinander angebrachte Teile aufweist, von denen eines ein im allgemeinen ebener Boden (1) ist, der mit Ballast (19) versehen ist, und einen im wesentlichen kegelstumpfförmigen Käfig (2) aufweist, dessen große Basis mit dem Boden (1) verbunden ist und der eine Stützarmierung für ein Netz (6) bildet, welches darauf befestigt ist, wobei die Reuse eine Öffnung (7) mit Verengung hat, die zum Inneren des Käfigs hin gerichtet ist, sich nach unten verengt und ohne Netz ist und in der Mitte der oberen Fläche des Käfigs (2) vorgesehen ist, dadurch gekennzeichnet, daß der Boden (1) zu seiner Mitte hin ein Hohlteil (8) aufweist, welches nach außen hin einen Vorsprung bildet, d. h. in der normalen Position der Reuse nach unten hin, daß die Außenmaße dieses Vorsprunges denen der Öffnung (7) entsprechen und den Eingriff dieses Vorsprunges in der Öffnung (7) erlaubt, wenn eine Reuse zum Lagern darunter angeordnet ist.

2. Reuse nach Anspruch 1, dadurch gekennzeichnet, daß der Boden an seinem Umfang zwei Ränder in geringen Abständen (10, 11) voneinander aufweist, zwischen denen Räume angeordnet sind und über jeweilige Öffnungen nach oben (12) und nach unten münden, wobei in diesen Räumen Ballast aus Beton (19) oder dergleichen gegossen ist.

3. Reuse nach Anspruch 2, dadurch gekennzeichnet, daß in den Räumen vor dem Gießen des Betonballastes Verstärkungsarmierungen (14), beispielsweise aus Metall, angeordnet sind.

4. Reuse nach Anspruch 2 oder 3, dadurch gekennzeichnet, daß sich die Räume nach oben (bei 12) öffnen und sich nach unten öffnen, wobei sie einander nicht gegenüberstehen, wobei die mit Beton gefüllten Räume sich nach unten öffnen und Stützunterlagen für die Reuse bilden.

5. Reuse nach einem der vorhergehenden Ansprüche, dadurch gekennzeichnet, daß sich auf der Öffnung (7) ein Reduktionskonus (15) durch einfachen Krafteingriff durch Klemmung anpaßt, passend zu einer Wand, die zwei in gleichem Sinne ausgerichtete Kegelstümpfe (16, 17) aufweist, deren jeweils kleinster äußerer Durchmesser (D3, D2) etwas unter dem kleinen Durchmesser (D0) der Öffnung (7) und deren größter äußerer Durchmesser (D1, D4) etwas über dem kleinen Durchmesser der Öffnung liegt.

6. Reuse nach Anspruch 5, dadurch gekennzeichnet, daß zwischen den zwei Kegelstümpfen (16, 17) Versteifungszungen (18) gebildet sind, die bezüglich des Durchmessers (D0) der Öffnung etwas eingerückt sind.

7. Reuse nach einem der vorhergehenden Ansprüche, dadurch gekennzeichnet, daß der Käfig (2) und der Boden (1) miteinander durch Gelenkstäbe (4) verbunden sind, die durch Verschieben in Scharnierösen (3) einführbar sind und mit dem Boden und dem Käfig zusammenwirken, wobei die Stäbe hohl sind, und mit einem biegsamen Bindeglied (5) verbunden sind, wie z. B. eine Schnur oder dergleichen, welches durch die Stäbe hindurchgeht und am Boden befestigt ist.

8. Reuse nach einem der vorhergehenden Ansprüche, dadurch gekennzeichnet, daß die Armierungen des Käfigs aus Hohlprofilen (20) mit offenem Abschnitt gebildet sind, in welchen die Befestigungsbindeglieder für das Netz (22) gesichert sind, welches gegen die Innenwände des Käfigs gehalten ist.

9. Reuse nach Anspruch 8, dadurch gekennzeichnet, daß das Netz (22) aus einem gegossenen Kunststoffgeflecht gebildet ist.

10. Reuse nach einem der vorhergehenden Ansprüche, dadurch gekennzeichnet, daß die Füße in Form von Unterlagen (24) an vier unteren Ecken des Bodens (1) angebracht sind.

FIG 1

FIG 2

FIG 3

FIG 4

**0 069 624**

FIG_5

FIG_6